# EUROPÄISCHE PATENTANMELDUNG

(11) **EP 2 987 965 A1**
(43) Veröffentlichungstag der Anmeldung: **24.02.2016**
(21) Anmeldenummer: 14181720.5
(22) Anmeldetag: 21.08.2014
(51) Int. Cl.: F01D 25/14, F01D 19/00

(54) **Gasturbine mit Ringkanal und Verteilrohr in diesem**

(71) Anmelder: Siemens Aktiengesellschaft, 80333 München (DE)
(72) Erfinder: Hüning, Marcus, 45478 Mülheim an der Ruhr (DE); Goßmann, Otmar, 51766 Engelskirchen (DE); Kahlstorf, Uwe, 45478 Mülheim a.d. Ruhr (DE)

(57) **Zusammenfassung**

Die Erfindung betrifft eine Gasturbine (1) mit mindestens einem inneren Gehäuseteil (2) und mindestens einem äußeren Gehäuseteil (3), zwischen welchen beiden Gehäuseteilen (2, 3) wenigstens teilweise ein Ringkanal (4) angeordnet ist, der den bei Betrieb der Gasturbine (1) vorherrschende Nutzstrom des Arbeitsfluids (5) und den Gasturbinenläufer (6) umfänglich umgibt, wobei der Ringkanal (4) dazu ausgebildet ist, ein Kühlfluid (8), insbesondere Verdichterluft, zu leiten, wobei in dem Ringkanal (4) wenigstens ein als Verteilrohr ausgebildetes Rohr (20) vorgesehen ist, welches mit wenigstens einer Kühlfluidzuleitung (9) zur Kühlfluidzuführung fluidtechnisch verbunden ist und eine Mehrzahl von Auslassöffnungen (21) aufweist, welche zur Überführung des Kühlfluids (8) aus dem Rohr (20) durch Ausströmen in den Ringkanal (4) ausgebildet sind.

## Beschreibung

Die vorliegende Erfindung betrifft eine Gasturbine mit mindestens einem inneren Gehäuseteil und mindestens einem äußeren Gehäuseteil, zwischen welchen beiden Gehäuseteilen wenigstens teilweise ein Ringkanal angeordnet ist, der den bei Betrieb der Gasturbine vorherrschenden Nutzstrom des Arbeitsfluids um den Gasturbinenläufer umfänglich umgibt, wobei der Ringkanal dazu ausgebildet ist, ein Kühlfluid, insbesondere Verdichterluft zu leiten und an darin vorgesehene Abführöffnungen zur Weiterleitung zu verteilen.

Insbesondere bei stationären Gasturbinen, aber auch bei Flugzeugtriebwerken werden derartige Ringkanäle vorgesehen, um die Sekundärluft zu Kühl- und Dichtungszwecken gezielt vorbestimmten Bereichen zuführen zu können. Derartige Gasturbinen weisen aber meist verhältnismäßig schwere Gehäuseteile auf, die auch aufgrund ihrer metallischen Zusammensetzung eine große Wärmekapazität aufweisen. Bei der Nutzung der Gasturbine ist es aber mitunter erforderlich, die Ringkanäle zu bestimmten Betriebszeiten, wie etwa der Startphase, lediglich nur mit einem verhältnismäßig geringen Kühlfluidstrom zu beschicken. Zu diesen Betriebszeiten stellt es sich dann aber als problematisch heraus, dass das verhältnismäßig wärmere Kühlfluid, etwa als Verdichterendluft, in die noch kalten Ringkanäle eingeleitet wird und dort ungleichmäßig verteilt wird.

Es ist anzumerken, dass das erfindungsgemäße Kühlfluid, je nach Betriebszustand, sowohl im Sinne eines Fluids wirken kann, welches die Temperatur von Bauteilen des Ringkanals zu höheren Temperaturen hin verändert, wie auch zu niedrigeren Temperaturen. Da während eines Betriebs einer vollständig durchgewärmten Gasturbine die Kühlwirkung des Kühlfluids maßgeblich ist, wird nachfolgend weiterhin von einem Kühlfluid gesprochen. Dem Fachmann ist es jedoch verständlich, dass dieses Kühlfluid während der Startphase auch im Sinne eines Wärmefluids wirken kann.

Die ungleichmäßige Verteilung des Kühlfluids in dem Ringkanal hat jedoch die Auswirkung, dass sich bei solchen Betriebszeiten, also etwa beim Startbetrieb der Gasturbine, insbesondere diejenigen Bereiche des Ringkanals schneller erwärmen, welche mit einer verhältnismäßig größeren Kühlfluidmenge beaufschlagt und damit verstärkt erwärmt werden. Aufgrund der daraus resultierenden ungleichmäßigen thermischen Ausdehnung des Materials der Bauteile über den Umfang des Ringkanals hinweg kommt es insbesondere zu einem Verlust der für den Betrieb der Gasturbine so wichtigen Achsensymmetrie. Die Achsensymmetrie erlaubt nämlich eine verhältnismäßig gleichmäßige, rotationssymmetrische Ausbildung der Spaltabstände zwischen den statischen und rotierenden Bauteilen der Gasturbine und ermöglicht somit bei Optimierung dieser Spalte eine Effizienzverbesserung. Ist die Achsensymmetrie jedoch nicht gewährleistet bzw. zeitlich veränderlich, müssen die Spalte immer im Bezug auf die lokal und zeitlich kleinsten Spalte ausgelegt werden. Dies hat jedoch den Nachteil, dass in anderen räumlichen Bereichen der Gasturbine bzw. zu anderen Zeiten bei Betrieb die Spaltabstände verhältnismäßig groß und damit der Wirkungsgrad der Gasturbine nicht optimal ist. So ist es beispielweise ein bekanntes Phänomen, dass eine Gasturbine, insbesondere bei ihrem Startbetrieb eine Ovalisierung bzw. sogar ein Verbiegen der Gehäuseteile erfährt, welche auch durch eine ungleichmäßige Luftverteilung über den Umfang der Gehäuseteile des Ringkanals bzw. mehrerer Ringkanäle verursacht ist. Eine ungleichmäßige Lufttemperaturverteilung erschwert zudem auch die Turbinenschaufelkühlung, die aus dem Ringkanal etwa über darin vorgesehene Abführöffnungen zur Weiterleitung mit Verdichterluft versorgt wird.

Aufgrund dieser aus dem Stand der Technik bekannten Nachteile ergibt sich das technische Erfordernis, eine Gasturbine vorzuschlagen, welche die aus dem Stand der Technik bekannten Nachteile vermeiden kann. Insbesondere ist eine Gasturbine vorzuschlagen, welche eine verbesserte Kühlung einzelner Gehäuseteile bzw. Bauteile ermöglicht, so dass eine ungleichmäßige Temperaturbeaufschlagung in Umfangsrichtung des Ringkanals weitgehend vermieden werden kann. Dies betrifft insbesondere die Bauteile, welche den Ringkanal begrenzen.

Diese der Erfindung zugrundliegende Aufgaben werden gelöst durch eine Gasturbine gemäß Anspruch 1.

Insbesondere wird die der Erfindung zugrundeliegende Aufgabe gelöst durch eine Gasturbine mit mindestens einem inneren Gehäuseteil und mindestens einem äußeren Gehäuseteil, zwischen welchen beiden Gehäuseteilen wenigstens teilweise ein Ringkanal angeordnet ist, der den bei Betrieb der Gasturbine vorherrschenden Nutzstrom des Arbeitsfluids und den Gasturbinenläufer umfänglich umgibt, wobei der Ringkanal dazu ausgebildet ist, ein Kühlfluid, insbesondere Verdichterluft, zu leiten, und wobei in dem Ringkanal wenigstens ein als Verteilrohr ausgebildetes Rohr vorgesehen ist, welches mit mindestens einer Kühlfluidzuleitung zur Kühlfluidzuführung fluidtechnisch verbunden ist und eine Mehrzahl an Auslassöffnungen aufweist, welche zur Überführung des Kühlfluids aus dem Rohr durch Ausströmen in den Ringkanal ausgebildet sind.

Erfindungsgemäß sind also zwei Gehäuseteile vorgesehen, welche den Ringkanal, möglicherweise u.a., begrenzen. Der äußere Gehäuseteil begrenzt die Gasturbine typischerweise zur äußeren Umgebung hin und verhindert den Austritt des Arbeitsfluids aus der Gasturbine bei Betrieb. Der innere Gehäuseteil begrenzt den Heißgasstrom, also den Arbeitsfluidstrom und umgibt den Gasturbinenläufer. Der erfindungsgemäße Ringkanal ist somit als Sekundärluftplenum ausgebildet und ist zur Bevorratung wie auch zur gezielten Leitung und Verteilung von Kühlfluid, insbesondere Verdichterluft ausgebildet.

Bevorzugt ist das Kühlfluid Verdichterluft, kann aber auch ein Fluid einer externen Quelle sein, welches beispielsweise verdichtet wurde. Derartige Fluide sind etwa Luft-Wasser-Mischungen oder Luft-Dampf-Mischungen.

Der Kerngedanke der vorliegenden Erfindung ist in der Integration eines Rohres in den Ringkanal zu sehen, welches mit wenigstens einer Kühlfluidzuleitung zur Kühlfluidzuführung fluidtechnisch verbunden ist und so mit Kühlfluid beschickt werden kann. Anstelle einer direkten Beschickung des Ringkanals mit Kühlfluid wird also zunächst das Rohr, welches in den Ringkanal integriert ist, mit dem Kühlfluid beschickt, wobei die Überführung des Kühlfluids aus dem Rohr in den Ringkanal durch eine Mehrzahl von Auslassöffnungen in bzw. an dem Rohr ermöglicht wird.

Der effektive Strömungsquerschnitt des Rohrs ist hierbei typischerweise kleiner als der des Ringkanals selbst. Insofern kann auch bei Beschickung des Rohres mit einer geringen Menge an Kühlfluid eine im Vergleich zum Ringkanal selbst stärker gerichtete Kühlfluidströmung in dem Rohr ausgebildet werden. Zudem herrscht aufgrund der verhältnismäßig geringeren thermischen Wärmekapazität des Rohrs eine weitgehend gleichmäßige Kühlfluidtemperatur auch im transienten Betrieb der Gasturbine vor. Durch diese Einflüsse kann wiederum gewährleistet werden, dass weitgehend gleichmäßige Mengen an Kühlfluid über den Umfang des Rohres in den Ringkanal ausgegeben werden können. Damit kann insbesondere durch das Vorsehen des Rohrs verhindert werden, dass räumliche Bereich des Ringkanals nicht oder nur in einem geringem Maße mit Kühlfluid versorgt werden, welche weiter stromab in Bezug auf die Mündung einer Kühlfluidzuleitung des Ringkanals angeordnet sind. In anderen Worten erhalten so auch die weiter in Bezug auf die Kühlfluidzuleitung stromab liegenden Bereiche des Ringkanals auseichend Kühlfluid, so dass eine ungleichmäßige thermische Aufheizung der einzelnen örtlichen Bereiche des Ringkanals verhindert werden kann. Das Kühlfluid kann zudem je nach örtlichem Vorsehen der Auslassöffnungen gezielt auf Gehäuseteile geführt werden, die etwa bei Betrieb der Gasturbine einer erhöhten Kühlleistung bedürfen um ausreichend gekühlt zu werden.

Während also eine Beschickung des Ringkanals mit Kühlfluid mitunter eine unvorteilhafte Strömung zur Ausbildung einer örtlich gleichmäßigen Kühlfluidverteilung ausbildet, kann durch Vorsehen des als Verteilrohr ausgebildeten Rohres das Kühlfluid weitgehend kontrolliert und gezielt in den Ringkanal, und bevorzugt an diejenigen Gehäuseteile geführt werden, die einen erhöhten Kühlluftbedarf haben. Ebenso ist es möglich, bei gleichmäßiger Verteilung der Auslassöffnungen in dem Rohr eine weitgehend vergleichmäßigte Beschickung des Ringkanals mit Kühlfluid zu erreichen, ohne etwa auch Konvektionbeeinträchtigungen berücksichtigen zu müssen. Damit kann eine weitgehend vergleichmäßigte Kühlung der betreffenden Gehäuseteile des Ringkanals erreicht werden, so dass eine Verbiegung bzw. ungleichmäßige thermische Ausdehnung einzelner Gehäuseteile der Gasturbine weitgehend vermieden werden kann. Dies wiederum hat die vorteilhafte Konsequenz, dass die beschriebenen Spaltabstände in der Gasturbine verhältnismäßig gleichmäßig ausgebildet sind, und eine Spaltoptimierung über die gesamte Umfangsform der Gehäuseteile vorgenommen werden kann. Ferner ist damit ein besonders effizienter Betrieb der Gasturbine ermöglicht.

Die Erfindung erlaubt also das Kühlfluid zunächst über den gesamten Ringkanal umfänglich zu verteilen, bevor das Kühlfluid mit den metallischen Bauteilen des Ringkanals der Gasturbine in direkten thermischen Kontakt gerät. Aufgrund der gleichmäßigeren Übertragung der Wärmemenge von den Gehäuseteilen an das Kühlfluid können Phänomene, wie etwa die Ovalisierung oder das Verbiegen des gesamten Gehäuses vermieden werden.

An dieser Stelle ist darauf hinzuweisen, dass das als Verteilrohr ausgebildete Rohr im Sinne einer Strömungsführung zu verstehen ist, welche erlaubt, eine gerichtete und umschlossene Strömung auszubilden. Das Rohr hat hierzu eine Rohrwandung, welche als Strömungsbegrenzung dient. Damit kann auch ein Rohrquerschnitt definiert werden, welcher den Fluss des Kühlfluids bestimmt. Die Geometrie des Rohrquerschnitts muss hierbei nicht rund ausgeführt sein, ist dies jedoch in einer bevorzugten Ausführungsform. Der Rohrquerschnitt kann beispielsweise auch rechteckig oder oval sein, bzw. örtlich unterschiedlich, so dass das Rohr etwa den örtlichen Anforderungen des Ringkanals angepasst sein kann. Ebenso ist es denkbar, dass das Rohr als Wellschlauch ausgebildet ist. Typischerweise umfasst das Rohr eine wärmeharte Metalllegierung.

Gemäß einer ersten bevorzugten Ausführungsform der Erfindung ist vorgesehen, dass das Rohr über im Wesentlichen den gesamten Umfang des Ringkanals verläuft und bevorzugt die Auslassöffnungen in Umfangsrichtung voneinander gleich beabstandet sind. Die Auslassöffnungen sind typischerweise in Abständen von wenigen Zentimetern voneinander beabstandet. Ebenso können einzelne Gruppen von Auslassöffnungen vorgesehen sein, die über den Umfang des Rohres bzw. des Ringkanals verteilt sind. Aufgrund dieser Verteilung der Auslassöffnungen kann eine verhältnismäßig gleichmäßige Beschickung des Ringkanals mit Kühlluft erreicht werden, wobei auch diejenigen Gehäuseteile bevorzugt gekühlt werden können, die ohne vorsehen des Rohres einer stärkeren thermischen Aufheizung unterliegen würden.

An dieser Stelle ist auch darauf hinzuweisen, dass eine ungleichmäßige thermische Erwärmung des als Verteilrohr ausgebildeten Rohres selbst für den Betrieb der Gasturbine weitgehend unerheblich ist, da dieses lediglich zur Überführung von Kühlfluid in den Ringkanal dient, und zudem aufgrund der verhältnismäßig geringen thermischen Wärmekapazität der Wandung des Rohrs gering ist.

Gemäß einer weiteren bevorzugten Ausführungsform der Erfindung ist vorgesehen, dass die Auslassöffnungen derart an dem Rohr angebracht sind, dass das in den Ringkanal austretende Kühlfluid vermehrt in Richtung des äußeren Gehäuseteils ausströmt. Aufgrund der geeigneten Ausrichtung der Auslassöffnungen zu den äußeren Gehäuseteilen hin können diese Gehäuseteile vermehrt mit Kühlfluid in Kontakt geraten und thermisch konditioniert werden.

Alternativ kann bei Bedarf durch eine geeignete Ausrichtung in andere Richtungen des Ringkanals eine gezielte Luftströmung zur verbesserten Kühlung ausgebildet sein. Diese Richtungen umfassen insbesondere auch eine Richtung auf das innere Gehäuseteil hin, bzw. eine Kombination verschiedener Richtungen. Auch eine gezielte Luftströmung in Längserstreckungsrichtung der Gasturbine ist denkbar und je nach technischen Erfordernissen vorsehbar.

Gemäß einer weiteren bevorzugten Ausführungsform der Erfindung ist vorgesehen, dass der Strömungsquerschnitt des Rohrs veränderlich ausgestaltet ist, wobei insbesondere der Strömungsquerschnitt der Bereiche des Rohrs, welche näher an der Kühlfluidzuleitung angeordnet sind, größer ist, als derjenigen Bereiche, welche verhältnismäßig weiter von der selben Kühlfluidzuleitung entfernt angeordnet sind. Infolgedessen kann die Strömungsgeschwindigkeit des Kühlfluids in dem Rohr variable angepasst werden, so dass die Verweildauer und Flussmenge an Kühlfluid bzw. die lokalen statischen Drücke entsprechend angepasst werden. Damit kann bspw. erreicht werden, dass in den verhältnismäßig weiter von der Kühlfluidzuleitung entfernt angeordneten Bereichen des Rohrs trotz kontinuierlichen Verlusts von Kühlfluid über die Auslassöffnungen dennoch eine ausreichende Menge an Kühlfluid vorliegt.

Gemäß einer weiteren bevorzugten Ausführungsform der erfindungsgemäßen Gasturbine ist vorgesehen, dass das Rohr mit einer Mehrzahl an Kühlfluidzuleitungen versehen ist, welche insbesondere in Umfangsrichtung voneinander gleich beabstandet sind. Ausführungsgemäß kann somit eine weitere Vergleichmäßigung der Beschickung des Rohres mit Kühlfluid erreicht werden. Zudem kann der erforderliche Rohrdurchmesser verringert werden.

Gemäß einer weiteren bevorzugten Ausführungsform der Erfindung ist vorgesehen, dass die Auslassöffnungen als Bohrungen ausgebildet sind, welche insbesondere in ihrem Durchmesser im Querschnitt nicht größer als 30 mm bemessen sind. Bevorzugt sind die Querschnitte ebenfalls nicht kleiner als 0,5 mm. Die Ausführung der Auslassöffnungen als Bohrungen ermöglicht eine besonders einfache Anfertigung des Rohres, welches die Auslassöffnungen umfasst. Sind die Bohrungen hinsichtlich ihres Querschnittes nicht größer als 30 mm im Durchmesser bemessen, kann auch eine gezielte Kühlluftströmung zu den Gehäusebauteilen des Ringkanals hin erreicht werden, wodurch ein zusätzlicher Kühleffekt mittels Prallkühlung erreicht werden kann.

Gemäß eines weiteren Aspektes der vorliegenden Erfindung ist vorgesehen, dass das Rohr einen Querschnitt senkrecht zur Umfangsrichtung aufweist, welcher nicht größer als 40 cm, insbesondere nicht größer als 25 cm im Durchmesser ist. Bevorzugt ist der Durchmesser ebenfalls nicht kleiner als 1 cm. Der Rohrquerschnitt definiert ein Rohrvolumen, welches geeignet ist, Kühlluft bei verschiedenen Drücken aufzunehmen, zu den Auslassöffnungen zu strömen, um das Kühlfluid anschließend aus den Auslassöffnungen in den Ringkanal überströmen zu lassen. Der Querschnitt des Rohres ist ausreichend klein bemessen, so dass auch bei geringen Drücken sich eine gerichtete Strömung auf Grund von Druckunterschieden in dem Rohr ausbildet.

Gemäß einer weiteren besonders bevorzugten Ausführungsform der Erfindung ist vorgesehen, dass das Rohr eine Wandung aufweist, welche senkrecht zur Umfangsrichtung nicht größer als 8 mm ist. Bevorzugt ist die Wandung nicht kleiner als 0,5 mm. Ist das Rohr nämlich aus einem metallischen Werkstoff, wie dies im Normalfall der Fall sein wird, weist das Rohr selbst eine nur geringe Wärmekapazität auf, und führt weitgehend nicht zu einer Verzerrung der Temperaturverteilung des aus den Auslassöffnungen austretenden Kühlfluids.

Gemäß einer weiteren bevorzugten Ausführungsform der Erfindung ist vorgesehen, dass das Rohr als doppelwandiges Rohr ausgebildet ist. Insofern kann das innere Volumen des Rohres von den äußeren Bereichen des Rohres thermisch entkoppelt werden, wodurch wiederum eine stärkere Vergleichmäßigung des aus dem Rohr austretenden Arbeitsfluids hinsichtlich seiner Temperatur erfolgen kann.

Weiterhin ist es möglich, dass auch das Rohr mit einer thermischen Isolierschicht versehen ist. Die thermische Isolierschicht kann sowohl innerlich als auch äußerlich aufgebracht sein. Auch diese thermische Isolierschicht dient wiederum zu einer Vergleichmäßigung der Temperaturverteilung über das Rohr hinweg, um so unterschiedliche Aufheizraten des Kühlfluids durch das Rohr selbst weitgehend zu vermeiden.

Gemäß einer weiteren bevorzugten Ausführungsform der Erfindung ist vorgesehen, dass die Auslassöffnungen einen in Richtung von innen nach außen wenigstens bereichsweise verengten Auslassquerschnitt haben und insbesondere als Düsen ausgebildet sind. Aufgrund der Düsenfunktion kann das Kühlfluid aus den Auslassöffnungen unter einer höheren Fluidbeschleunigung austreten und derart gezielter in den Ringkanal überströmen. Insbesondere ermöglichen die Düsen eine verbesserte Prallfluidkühlung durch gezielte Überführung eines Fluidstroms aus den Düsen an die Gehäuseteile des Ringkanals.

Entsprechend einer weiteren bevorzugten Ausführungsform der Erfindung kann vorgesehen sein, dass das Rohr mittels Halteblechen in dem Ringkanal befestigt ist. Die Haltebleche können hierbei insbesondere Segmente des Ringkanals ausbilden, die auch gegeneinander fluiddicht abgeschlossen sind. Der Fluidaustausch über die Segmente hinweg kann also nur über das Rohr erfolgen. Während die Haltebleche im einfachsten Fall das Rohr lediglich gezielt in dem Ringkanal befestigen, können bei geeigneter Ausbildung der Haltebleche strömungsbeeinflussende Oberflächen geschaffen werden, die zu einer weiteren Vergleichmäßigung des Kühlfluids bzw. seiner Temperatur über den Ringkanal hinweg dienen. Insbesondere wenn die Haltebleche einen Fluidaustausch einzelner Segmente untereinander verhindern kann, kann so die Ausbildung eines sich über den Ringkanal ausbildenden Konvektionsstromes verhindert werden, wodurch wiederum eine verbesserte Kühlfluidüberführung und Kühlfluidkühlung die Folge sein kann.

Gemäß einer weitergehenden Ausführungsform der Erfindung ist vorgesehen, dass wenigstens einige der Haltebleche, insbesondere alle Haltebleche wenigstens einen Durchbruch aufweisen, über welchen Kühlfluid hindurchtreten kann. Dieser Durchbruch kann etwa zur Durchführung des als Verteilrohr ausgebildeten Rohres vorgesehen sein, kann jedoch auch zusätzlich zur fluidtechnischen Verschaltung einzelner Bereiche, die durch die Haltebleche begrenzt sind, dienen. Sind beispielsweise die Durchbrüche verhältnismäßig klein, wird bei geringen Druckunterschieden des Kühlfluids in dem Ringkanal mit einem nur geringen Austausch zu rechnen sein, wohingegen bei verhältnismäßig größeren Druckunterschieden ein größerer Austausch die Folge wäre. Damit können thermische und strömungstechnische Effekte soweit aufeinander eingestellt werden, dass eine weitgehend gute Kühlung durch das Kühlfluid über den gesamten Ringkanal erfolgen kann.

Nachfolgend wird die Erfindung anhand einzelner Figuren im Detail erklärt. Hierbei soll darauf hingewiesen werden, dass die in den Figuren gezeigten technischen Merkmale lediglich schematisch zu verstehen sind, so dass die Ausführbarkeit der Erfindung aufgrund der schematischen Natur nicht in Frage gestellt werden kann.

Weiterhin ist darauf hinzuweisen, dass alle technischen Merkmale, welche durch gleiche Bezugszeichen versehen sind, gleiche technische Wirkungsweisen aufweisen sollen.

Weiterhin ist darauf hinzuweisen, dass beliebige Kombinationen der nachfolgend gezeigten technischen Merkmale im Rahmen der Erfindung beansprucht werden sollen soweit die Kombination dazu in der Lage ist, die der Erfindung zugrundeliegenden Aufgaben zu lösen.

Hierbei zeigen:
FIG 1 eine seitliche Schnittansicht durch eine Gasturbine in Längsrichtung, wie sie aus dem Stand der Technik bekannt ist.
FIG 2 eine Querschnittansicht durch den Ringkanal einer aus dem Stand der Technik bekannten Gasturbine senkrecht zur Längsrichtung der Gasturbine.
FIG 3 eine erste Ausführungsform des erfindungsgemäßen Ringkanals einer erfindungsgemäßen Gasturbine in Querschnitt senkrecht zur Längsrichtung der Gasturbine;
FIG 4 eine weitere Ausführungsform eines erfindungsgemäßen Ringkanals einer erfindungsgemäßen Gasturbine in Querschnitt senkrecht zur Längsrichtung der Gasturbine;
FIG 5 eine Detaildarstellung eines Längsquerschnitts durch eine Ausführungsform einzelner Ringkanäle einer erfindungsgemäßen Gasturbine;

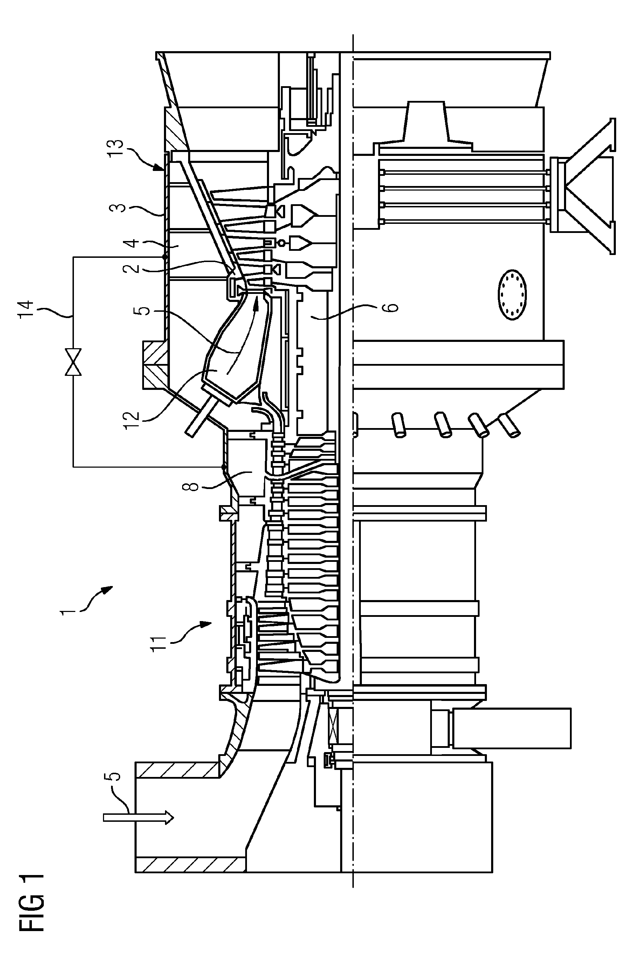

FIG 1 zeigt eine aus dem Stand der Technik bekannte Ausführungsform einer Gasturbine 1 in Längsschnitt, welche neben einem Verdichter 11, einer Brennkammer 12 und einer Entspannungsturbine 13 auch eine Sekundärluftleitung 14 aufweist, die erlaubt, Verdichterluft aus dem Verdichter 11 zu vorbestimmten Bereichen der Entspannungsturbine 13 zu führen. Die Sekundärluftleitung 14 kann natürlich auch in das Gehäuse der Gasturbine 1 integriert sein. Um den Verdichterluftstrom geeignet einzustellen, ist die Sekundärluftleitung 14 möglicherweise mit einem Dosierventil (kein Bezugszeichen) versehen. Hierbei wird aus einem Plenum welches nicht weiter mit einem Bezugszeichen versehen ist, nahe des Verdichters 11 Verdichterluft als Kühlfluid 8 entnommen und mittels der Sekundärluftleitung 14 einem Ringkanal 4 nahe der Entspannungsturbine 13 zugeführt.

Der Ringkanal 4 wird nach außen hin zur Umgebung durch ein äußeres Gehäuseteil 3 sowie nach innen hin zu den drehenden Teilen der Entspannungsturbine 13 durch ein inneres Gehäuseteil 2 begrenzt. In Längsrichtung wird der Ringkanal 4 durch nicht weiter mit Bezugszeichen versehene Bleche bspw. ebenfalls begrenzt. Es sind aber auch anderweitige Abgrenzungen denkbar.

Wird nun die Gasturbine 1 betrieben, wird Luft, welche als Arbeitsfluid 5 dient, in den Verdichter 11 eingesogen und als Kühlfluid teilweise über die Sekundärluftleitung 14 dem Ringkanal 4 aufgrund eine Druckgefälles in der Sekundärluftleitung 14 zugeführt. Der weitgehend größte Teil des Arbeitsfluids 5 aus dem Verdichter 11 wird der Brennkammer 12 zugeleitet, in welcher die Verdichterluft mit Brennstoff zu Heißgas verbrannt wird. Das Heißgas tritt als Arbeitsfluid 5 zur Entspannung in die Entspannungsturbine 13 über und treibt diese in einer Drehbewegung an. Gleichzeitig wird die Drehbewegung auf den Gasturbinenläufer 6 übertragen.

Gerade aber während des Startvorgangs der Gasturbine 1 wird noch verhältnismäßig wenig Kühlfluid in der Sekundärluftleitung 14 an den Ringkanal 4 geliefert. Aufgrund der sich deswegen ungleichmäßig einstellenden Temperaturverteilung einerseits zwischen einzelnen Bereichen der Gehäuseteile 2,3 selbst, wie auch zwischen dem inneren Gehäuseteil 2 und dem äußeren Gehäuseteil 3 kommt es zu einer ungleichmäßigen Aufheizung insbesondere über den Zeitraum des Startbetriebes und der Zeit bis zur vollständigen Durchwärmung. Infolgedessen können die Spaltabstände zwischen den beweglichen Bauteilen der Entspannungsturbine 13 und dem inneren Gehäuseteil 2 nicht soweit verringert werden, dass ein sehr effizienter Gasturbinenbetrieb erreicht werden könnte. Vielmehr gibt es in den ungleichmäßig aufgeheizten Bereichen des inneren Gehäuseteils 2 zu den beweglichen Bauteilen der Entspannungsturbine 13 unterschiedliche Spaltabstände, wodurch die Effizienz des Gasturbinenbetriebs leidet.

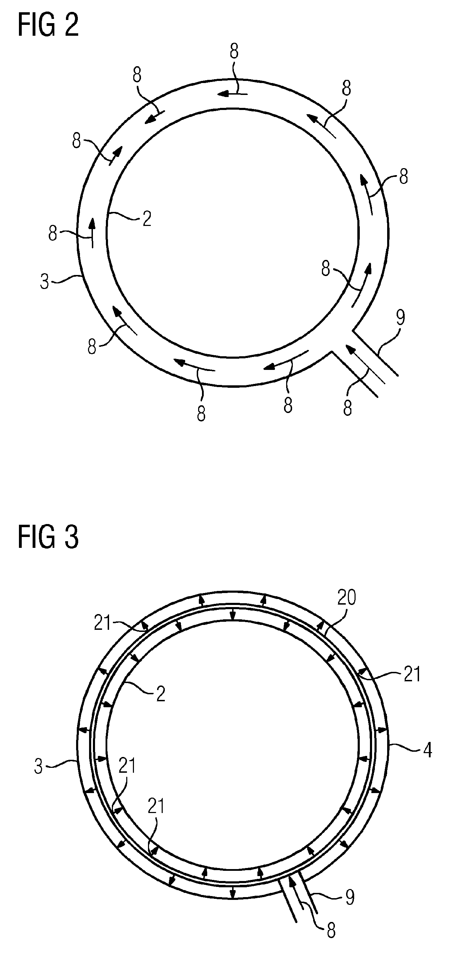

FIG 2 zeigt einen Längsquerschnitt durch einen Ringkanal 4 einer aus dem Stand der Technik bekannten Gasturbine 1. Insbesondere bei geringen Kühlfluidströmen, die über die Kühlfluidzuleitung 9 in den Ringkanal 4 zugeführt werden, bildet sich eine ungleichmäßige Temperaturverteilungen über den Umfang des Ringkanals 4 aus. So wird etwa der Kühlfluidfluss entlang des Strömungsweges in dem Ringkanal 4 auch zunehmend geringer, da aus dem Ringkanal 4 zunehmend Kühlfluid 8, etwa zur Turbinenschaufelkühlung, über nicht weiter gezeigte Abführöffnungen abgeführt wird. Die in Strömungsrichtung in dem Ringkanal 4 zunehmend geringer werdenden Kühlfluidflüsse sind vorliegend durch zunehmen kleinere Pfeile angedeutet. Aufgrund der inhomogenen Verteilung von Kühlfluid 8 in dem Ringkanal 4 ist auch die Kühlleistung über den Umfang des Ringkanals 4 zunehmen geringer. In Folge werden sich die Bereiche der Gehäuseteile 2,3 verstärkt während des Starts thermisch ausdehnen, welche mit einer verhältnismäßig höheren Kühlfluidmenge beaufschlagt werden als die weiter stromab liegenden Bereiche. Die Folge ist ein thermisches Verziehen und Verbiegen der Gehäuseteile, welches es zu verhindern gilt.

FIG 3 zeigt eine erste Ausführungsform des erfindungsgemäßen Ringkanals 4 einer erfindungsgemäßen Gasturbine 1 in Längsquerschnitt. Hierbei ist in dem Ringkanal 4 im Vergleich zu der in FIG 2 gezeigten Ausführungsform nun ein als Verteilrohr ausgebildetes Rohr 20 angeordnet, welches über eine Kühlfluidzuleitung 9 mit Kühlfluid 8 beschickt werden kann. Aufgrund des im Vergleich zum Ringkanal 4 verhältnismäßig geringeren Strömungsquerschnitts des Rohres 20 kann das Kühlfluid 8 in dem Rohr 20 schneller und homogener verteilt werden, und anschließend über Auslassöffnungen 21 in den Ringkanal 4 überführt werden. Ausführungsgemäß sind die Auslassöffnungen 21 auf den inneren Gehäuseteil 2 und den äußeren Gehäuseteil 3 gerichtet, so dass diese zunächst durch gezielte Strömungen des Kühlfluids 8 beaufschlagt werden und damit eine verstärkte Konditionierung erfahren können.

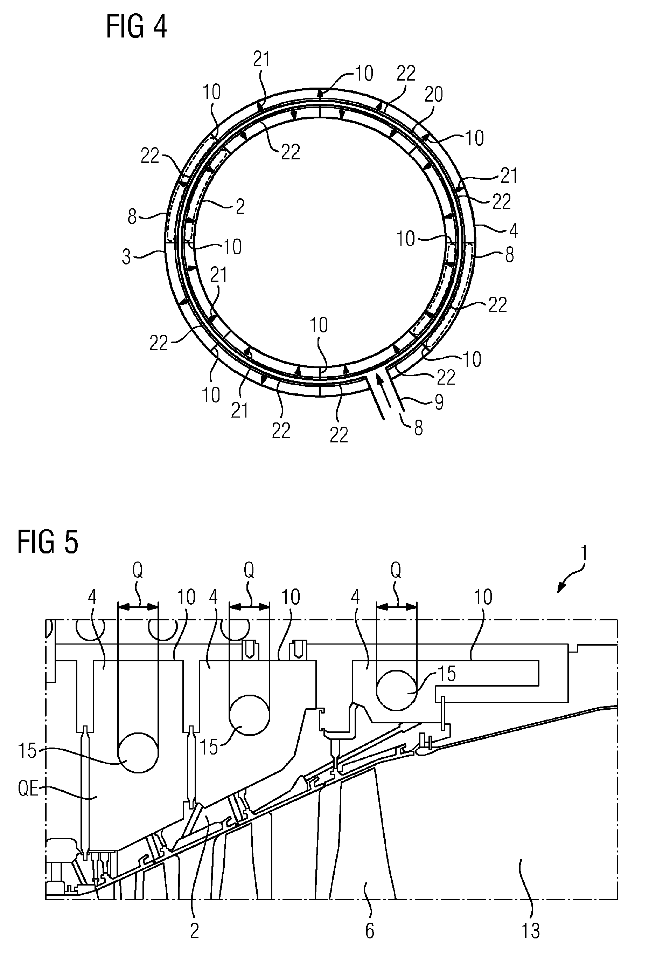

FIG 4 zeigt eine weitere Ausführungsform eines erfindungsgemäßen Ringkanals 4 in Längsquerschnitt, wobei nun das als Verteilrohr ausgebildete Rohr 20 durch einzelne Haltebleche 10 in dem Ringkanal 4 befestigt ist. Die Haltebleche 10 sind hierbei derart ausgebildet, dass lediglich ein Fluidaustausch über den Kanal für das Rohr 20 ermöglicht ist. Darüber hinaus sind die Haltebleche fluiddicht und verhindern einen Austausch des Kühlfluids 8 in einzelnen Segmenten, die durch die einzelnen Haltebleche 10 bestimmt werden. Nach Überführung des Kühlfluids 8 aus dem Rohr 20 in den Ringkanal 4 wird somit Kühlfluid in den einzelnen durch die Haltebleche 10 bestimmte Segmente angesammelt, und lokal bevorratet. Je nach Temperaturverteilung können sich in diesen Segmenten auch einzelne Konvektionszellen ausbilden, die vorliegend durch die gestrichelten Linien angedeutet sind. Aus den einzelnen Segmenten wird das Kühlfluid 8 gezielt in andere nicht weiter gezeigte Bereiche überführt. Hierbei weist jedes Segment natürlich eine geeignete Fluidableitung auf.

Vorliegend ist das Rohr 20 mit einer geeigneten Isolierschicht 22 versehen, welche eine verbesserte thermische Entkopplung zwischen dem in dem Rohr 20 geleiteten Kühlfluid 8 und der Umgebung des Ringkanals außerhalb des Rohrs 20 ermöglicht. Ebenfalls kann das Rohr 20 auch zur verbesserten thermischen Entkopplung doppelwandig ausgeführt sein.

FIG 5 zeigt einen Detailausschnitt in Längsschnittrichtung durch eine erfindungsgemäße Gasturbine 1, welche insgesamt drei voneinander fluiddicht getrennte Ringkanäle 4 aufweist. Die einzelnen Ringkanäle 4 weisen Haltebleche 10 auf, die der entsprechenden Ringkanalform angepasst sind. In den Halteblechen sind jeweils Durchbrüche 15 vorgesehen, die einen Durchmesser Q aufweisen. Der Durchmesser Q ist hierbei in der Querschnittsebene QE bestimmt, welche von den Halteblechen 4 definiert ist. Der Durchbruch 15 ist jeweils für die Durchführung und gleichzeitige Halterung eines nicht weiter gezeigten als Verteilrohr ausgebildeten Rohres 20 vorgesehen.

Weitere Ausführungsformen ergeben sich aus den Unteransprüchen.

## Patentansprüche

1. Gasturbine (1) mit mindestens einem inneren Gehäuseteil (2) und mindestens einem äußeren Gehäuseteil (3), zwischen welchen beiden Gehäuseteilen (2, 3) wenigstens teilweise ein Ringkanal (4) angeordnet ist, der den bei Betrieb der Gasturbine (1) vorherrschende Nutzstrom des Arbeitsfluids (5) und den Gasturbinenläufer (6) umfänglich umgibt, wobei der Ringkanal (4) dazu ausgebildet ist, ein Kühlfluid (8), insbesondere Verdichterluft, zu leiten,
**dadurch gekennzeichnet, dass**
in dem Ringkanal (4) wenigstens ein als Verteilrohr ausgebildetes Rohr (20) vorgesehen ist, welches mit wenigstens einer Kühlfluidzuleitung (9) zur Kühlfluidzuführung fluidtechnisch verbunden ist und eine Mehrzahl von Auslassöffnungen (21) aufweist, welche zur Überführung des Kühlfluids (8) aus dem Rohr (20) durch Ausströmen in den Ringkanal (4) ausgebildet sind.

2. Gasturbine nach Anspruch 1,
**dadurch gekennzeichnet, dass**
das Rohr (20) über im Wesentlichen den gesamten Umfang des Ringkanals (4) verläuft und bevorzugt die Auslassöffnungen (21) in Umfangsrichtung voneinander gleich beabstandet sind.

3. Gasturbine nach einem der vorhergehenden Ansprüche,
**dadurch gekennzeichnet, dass**
der Strömungsquerschnitt des Rohrs (20) veränderlich ausgestaltet ist, wobei insbesondere der Strömungsquerschnitt der Bereiche des Rohrs (20), welche näher an der Kühlfluidzuleitung (9) angeordnet sind größer ist, als derjenigen Bereiche, welche verhältnismäßig weiter von der selben Kühlfluidzuleitung (9) entfernt angeordnet sind.

4. Gasturbine nach einem der vorhergehenden Ansprüche,
**dadurch gekennzeichnet, dass**
das Rohr (20) mit einer Mehrzahl an Kühlfluidzuleitung (9) versehen ist, welche insbesondere in Umfangsrichtung voneinander gleich beabstandet sind.

5. Gasturbine nach einem der vorhergehenden Ansprüche,
**dadurch gekennzeichnet, dass**
die Auslassöffnungen (21) als Bohrungen ausgebildet sind, welche insbesondere in ihrem Durchmesser im Querschnitt nicht größer als 30mm bemessen sind.

6. Gasturbine nach einem der vorhergehenden Ansprüche,
**dadurch gekennzeichnet, dass**
das Rohr (20) einen Querschnitt senkrecht zur Umfangsrichtung aufweist, welcher nicht größer als 40cm im Durchmesser ist.

7. Gasturbine nach einem der vorhergehenden Ansprüche,
**dadurch gekennzeichnet, dass**
das Rohr (20) eine Wandung aufweist, welche senkrecht zur Umfangsrichtung nicht größer als 8mm ist.

8. Gasturbine nach einem der vorhergehenden Ansprüche,
**dadurch gekennzeichnet, dass**
das Rohr (20) als doppelwandiges Rohr (4) ausgebildet ist.

9. Gasturbine nach einem der vorhergehenden Ansprüche,
**dadurch gekennzeichnet, dass**
das Rohr (20) mit einer thermischen Isolierschicht (22) versehen ist.

10. Gasturbine nach einem der vorhergehenden Ansprüche,
**dadurch gekennzeichnet, dass**
die Auslassöffnungen (21) einen in Richtung von innen nach außen wenigstens bereichsweise verengten Auslassquerschnitt haben und insbesondere als Düsen ausgebildet sind.

11. Gasturbine nach einem der vorhergehenden Ansprüche,
**dadurch gekennzeichnet, dass**
das Rohr (20) mittels Halteblechen (10) in dem Ringkanal (4) befestigt ist.
